# EUROPÄISCHE PATENTSCHRIFT

(11) **EP 1 271 033 B1**
(45) Veröffentlichungstag und Bekanntmachung des Hinweises auf die Patenterteilung: **25.08.2004**
(21) Anmeldenummer: 02012144.8
(22) Anmeldetag: 01.06.2002
(51) Int. Cl.: F16L 11/118

(54) **Dehnbarer Kunststoffschlauch**
Expandable plastic hose
Tuyau extensible en matière plastique

(30) Priorität: 05.06.2001 DE 20109263 U
(43) Veröffentlichungstag der Anmeldung: 02.01.2003
(73) Patentinhaber: TRUPLAST KUNSTSTOFFTECHNIK GMBH, D-35428 Langgöns (DE)
(72) Erfinder: Linhart, Georg Peter, 61206 Wöllstadt (DE)
(74) Vertreter: Oppermann, Ewald, Dipl.-Ing.

(56) Entgegenhaltungen:
- DE-B- 1 103 696
- DE-B- 1 223 205
- GB-A- 2 322 925
- US-A- 4 230 899

## Beschreibung

Die Erfindung bezieht sich auf einen dehnbaren Kunststoffschlauch, dessen Wand innen und außen wendelförmig verlaufende Falten aufweist, zwischen die eine erste, zugleich als Zugfeder, elektrischer Leiter und Stützwendel ausgebildete Wendel eingreift, der eine ebenfalls als Zugfeder und elektrischer Leiter ausgebildete zweite Wendel zugeordnet ist.

Es ist bereits ein derartiger dehnbarer Kunststoffschlauch bekannt. Die beiden hier vorgesehenen Wendeln liegen beide in der Schlauchwand und haben den gleichen Durchmesser und die gleiche Steigung. Ferner liegen die Wendeln an zwei sich diametral gegenüberliegenden Stellen jeder Windung nebeneinander und überkreuzen sich einmal in dem zwischen diesen beiden Stellen liegenden Bereich (DE-PS 1 103 696).

Das Dokument GB-A-2 322 925 beschreibt auch einen derartigen Kunststoffshlauch, der alle Merkmale des Oberbegriffs des Anspruchs 1 offerbart.

Aufgabe der Erfindung ist es, den dehnbaren Kunststoffschlauch der eingangs genannten Art wesentlich zu vereinfachen.

Diese Aufgabe wird erfindungsgemäß entsprechend Anspruch 1 dadurch gelöst, daß die zweite Wendel einen Außendurchmesser aufweist, der kleiner ist als der Innendurchmesser der zusammengefalteten Schlauchwand, und daß die Steigung der zweiten Wendel gegenläufig zur Steigung der ersten Wendel verläuft.

Die Lösung ermöglicht es, die fertigungstechnisch aufwendige Nebeneinanderanordnung der Wendeln aufzugeben. Statt dessen kann ein bereits bekannter dehnbarer Schlauch mit einer einzigen Stützwendel in den Falten der Schlauchwand verwendet werden. Die zweite, ebenfalls zugleich als Zugfeder und elektrischer Leiter ausgebildete Wendel ist separat auf einer Federwickelmaschine herstellbar und braucht nur in den Kunststoffschlauch eingeschoben zu werden. Damit die zweite Feder jedoch nicht in den Falten des Kunststoffschlauchs eingeklemmt werden kann, ist vorgesehen, den Außendurchmesser der zweiten Wendel kleiner zu halten als den Innendurchmesser der zusammengefalteten Schlauchwand und außerdem die Steigung der zweiten Wendel gegenläufig zur Steigung der Stützwendel zu gestalten.

Eine zweckmäßige Aus- und Weiterbildung des Erfindungsgegenstands ist gemäß Anspruch 2 dadurch gekennzeichnet, daß die Kerne beider Wendeln mit einem elektrisch gut leitenden Überzug, zum Beispiel aus Kupfer, versehen sind.

Ein Ausführungsbeispiel der Erfindung ist in der Zeichnung rein schematisch dargestellt.

Es zeigen:
- Fig. 1: den Längsschnitt durch einen Kunststoffschlauch und
- Fig. 2: einen vergrößerten Ausschnitt der Fig. 1.

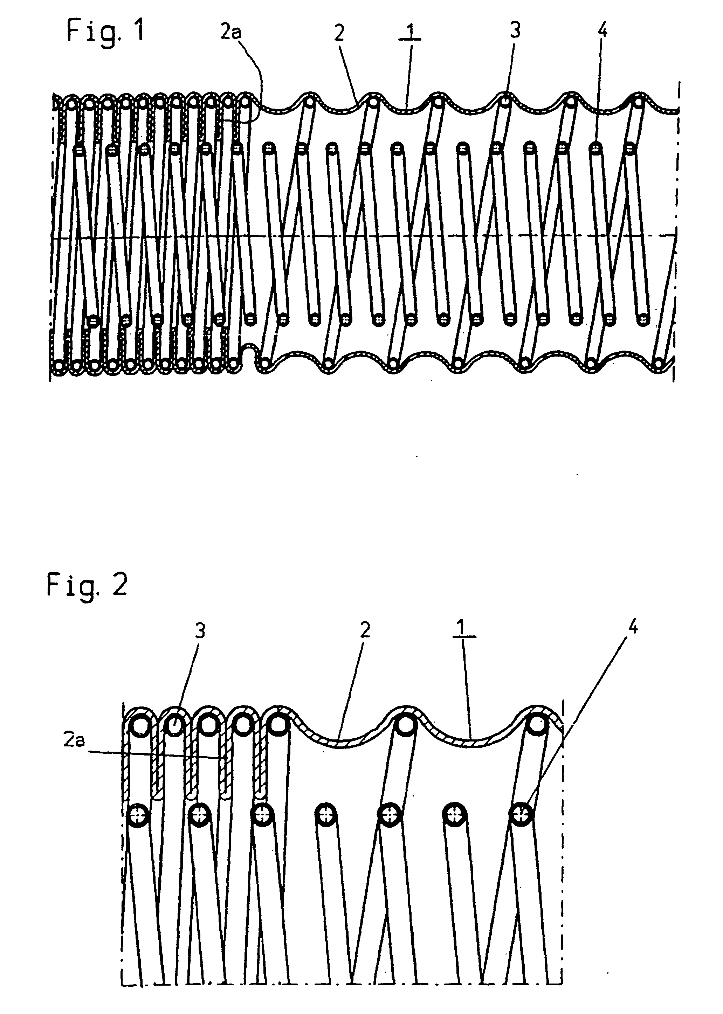

In Fig. 1 ist mit 1 ein Kunststoffschlauch bezeichnet und dessen Wand mit 2. Die Wand 2 weist innen und außen wendelförmig verlaufende Falten 2a auf.

Zwischen die inneren Falten 2a greift eine zugleich als Zugfeder, Stützwendel und elektrischer Leiter ausgebildete, kunststoffisolierte erste Wendel 3 ein. Diese faltet mit eigener Kraft die Schlauchwand 2 zu eng aneinander liegenden Falten 2a, wie aus der linken Seite der Figuren ersichtlich ist. Wenn die Stützwendel 3 gedehnt wird, verflachen sich die Falten 2a, unter Verlängerung des gesamten Schlauchs 1, wie anschließend an die eng aneinander liegenden Falten 2a gezeigt ist.

Der ersten Wendel 3 ist eine zweite, zugleich als Zugfeder und elektrischer Leiter ausgebildete Wendel 4 zugeordnet, die ebenfalls kunststoffummantelt ist.

Die Wendeln 3 und 4 sind vorzugsweise Stahlfedern.

Die zweite Wendel 4 dient jedoch nicht als Stützwendel. Sie ist koaxial zur ersten Wendel 3 im Kunststoffschlauch 1 angeordnet. Sie hat ferner einen Außendurchmesser, der kleiner ist als der Innendurchmesser der zusammengefalteten Schlauchwand 2. Damit die zweite Wendel 4 beim Biegen des gesamten Schlauchs 1 nicht in die Falten 2a der Schlauchwand eingeklemmt werden kann, verläuft ihre Steigung gegenläufig zur Steigung der ersten Wendel 3.

Zur Verbesserung der Leitfähigkeit der Wendeln 3 und 4 sind ihre Oberflächen mit einem gut leitenden Überzug, zum Beispiel aus Kupfer, versehen. Der Überzug kann galvanisch aufgebracht sein.

Der dehnbare Kunststoffschlauch ist insbesondere bei medizinischen Geräten verwendbar.

## Patentansprüche

1. Dehnbarer Kunststoffschlauch, dessen Wand (2) innen und außen wendelförmig verlaufende Falten (2a) aufweist, zwischen die eine erste, zugleich als Zugfeder, elektrischer Leiter und Stützwendel ausgebildete Wendel (3) eingreift, der eine ebenfalls als Zugfeder und elektrischer Leiter ausgebildete zweite Wendel (4) zugeordnet ist, wobei die zweite Wendel koaxial zur ersten Wendel im Kunstsoffschlauch angeordnet ist, **dadurch gekennzeichnet, daß** die zweite Wendel (4) einen Außendurchmesser aufweist, der kleiner ist als der Innendurchmesser der zusammengefalteten Schlauchwand (2), und daß die Steigung der zweiten Wendel (4) gegenläufig zur Steigung der ersten Wendel (3) verläuft.

2. Dehnbarer Kunststoffschlauch nach Anspruch 1, **dadurch gekennzeichnet, daß** die Kerne beider Wendeln (3, 4) mit einem elektrisch gut leitenden Überzug, zum Beispiel aus Kupfer, versehen sind.

## Claims

1. Expandable plastic hose, whose wall (2) is provided on the inside and outside with helically directed folds (2a), between which engages a first helix (3) constructed as a tension spring, electrical conductor and support helix, with which is associated a second helix (4) also constructed as a tension spring and electrical conductor, the second helix being positioned coaxially to the first helix in the plastic hose, **characterized in that** the second helix (4) has an external diameter smaller than the internal diameter of the folded together hose wall (2) and that the pitch of the second helix (4) is directed oppositely to the pitch of the first helix (3).

2. Expandable plastic hose according to claim 1, **characterized in that** the cores of both helixes (3, 4) are provided with an electrically good conducting coating, e.g. of copper.

## Revendications

1. Tuyau extensible en matière plastique dont la paroi (2) présente des plis (2a) qui s'étendent à l'intérieur et l'extérieur en forme d'hélice et entre lesquels s'engage une première spirale (3) qui est réalisée à la fois sous forme de ressort de traction, de conducteur électrique et de spirale de soutien et à laquelle est associée une deuxième spirale (4) réalisée également sous forme de ressort de traction et de conducteur électrique, la deuxième spirale étant agencée coaxialement à la première spirale dans le tuyau en matière plastique, **caractérisé en ce que** la deuxième spirale (4) présente un diamètre extérieur inférieur au diamètre intérieur de la paroi de tuyau repliée (2), et **en ce que** le pas de la deuxième spirale (4) est opposé au pas de la première spirale (3).

2. Tuyau extensible en matière plastique selon la revendication 1, **caractérisé en ce que** les âmes des deux spirales (3, 4) sont pourvues d'un revêtement bon conducteur électrique, par exemple en cuivre.
